# EUROPÄISCHE PATENTSCHRIFT

(11) **EP 1 654 654 B1**
(45) Veröffentlichungstag und Bekanntmachung des Hinweises auf die Patenterteilung: **05.12.2007**
(21) Anmeldenummer: 04739264.2
(22) Anmeldetag: 19.05.2004
(51) Int. Cl.: G06F 11/32, H04L 12/24

(54) **VERFAHREN ZUR AUTOMATISIERTEN ERMITTLUNG DES SCHADENSAUSMASSES IN FOLGE EINES AUSFALLS VON IN EINEN PRODUKTIONSABLAUF EINGEBUNDENEN TECHNISCHEN KOMPONENTEN IN OBJEKTEN**
METHOD FOR THE AUTOMATED DETERMINATION OF THE EXTENT OF DAMAGES IN OBJECTS RESULTING FROM A FAILURE OF TECHNICAL COMPONENTS INTEGRATED IN A PRODUCTION CYCLE
PROCEDE DE DETERMINATION AUTOMATISEE DE L'AMPLEUR DE DOMMAGES, INTERVENANT SUITE A UNE DEFAILLANCE DE CONSTITUANTS TECHNIQUES INTEGRES DANS LE DEROULEMENT D'UN PROCESSUS DE PRODUCTION, DANS DES OBJETS

(30) Priorität: 20.05.2003 DE 10323040
(43) Veröffentlichungstag der Anmeldung: 10.05.2006
(73) Patentinhaber: T-Mobile Deutschland GmbH, 53227 Bonn (DE)
(72) Erfinder: HACHMANN, Frank, 53579 Erpel (DE); PESCHEL, Dietmar, 53340 Meckenheim (DE); SACHGAU, Christian, 53560 Vettelschoss (DE)
(74) Vertreter: Riebling, Peter
(86) Internationale Anmeldenummer: PCT/EP2004/005414
(87) Internationale Veröffentlichungsnummer: WO 2004/104837

(56) Entgegenhaltungen:
- SCHWARTZ S.H.; ZAGER D.: 'Value-Oriented Network Management' CONFERENCE PROCEEDINGS ARTICLE 10 April 2000, Seiten 715 - 728, XP010376719

## Beschreibung

Die Erfindung betrifft ein Verfahren zur automatisierten Ermittlung des Schadensausmaßes in Folge eines Ausfalls von in einen Produktionsablauf eingebundenen technischen Komponenten, z.B. von Komponenten eines Computernetzwerks oder Telekommunikationsnetzwerks, in Objekten, unter Berücksichtigung von Netzwerkstruktur, Notfallplanung, Wiederanlaufplanung, und Kunden- bzw. Nutzerverhalten.

Die Sicherstellung der Verfügbarkeit von technischen Komponenten, z.B. in IT-Netzwerken, Telekommunikationsnetzwerken, etc., ist wesentlich für eine qualitativ hochwertige Kundenbeziehung. Der Totalausfall eines Objektes, z.B. eines Raums oder eines ganzen Gebäudes, mit allen darin befindlichen technischen Komponenten kann sich innerhalb kürzester Zeit für ein Unternehmen existenzbedrohend auswirken.

Zu diesem Zweck haben viele Unternehmen Maßnahmen, wie z.B. redundante Netzwerkstruktur, Notfall- und Wiederanlaufplanung, umgesetzt, um die Kundenbeeinträchtigung bei Totalausfall von technischen Komponenten zu minimieren bzw. zu neutralisieren.
Die Maßnahmen sollen das zu erwartenden Schadensausmaß verhindern bzw. minimieren. Die Kosten der Maßnahmen müssen rentabel sein und in einem betriebswirtschaftlich vertretbarem Verhältnis zur Höhe des zu erwartenden Schadensausmaß stehen.

Der Invest und die Kosten einer Maßnahme lassen sich recht genau feststellen, zur Ermittlung des zu erwartenden Schadensausmaßes hingegen müssen viele Parameter und komplexe Abhängigkeiten berücksichtigt werden.
Bisher wurde bei der Berechung des Schadens durch den Ausfall einer oder mehrerer technischer Komponenten lediglich der Wiederbeschaffungswert der Komponente(n) und der Schaden, der sich durch den Stillstand der Komponenten direkt ergibt, berücksichtigt. Dabei wurde davon ausgegangen, dass die Komponente für einen bestimmten Zeitraum nicht zur Verfügung steht und nach Ablauf dieses Zeitraum zu 100% wieder verfügbar ist. Die Tatsache, dass die ausgefallenen Komponenten durch Notfallplanungen, sogenannte Workarounds, nicht gleichzeitig sondern in der Regel sukzessive wieder zur Verfügung stehen und die Betroffenen unterschiedlich lange unter den Folgen des Ausfalls leiden müssen, wurde dabei nicht außer Acht gelassen.

Das Dokument von Schwartz, S. H. und Zager, D.: "Value-oriented Network Management", Conference Proceedings Article, ISBN 0-7803-5864-3, 10. April 2000, Seiten 715-728 offenbart ein Verfahren und eine Architektur für ein werteorientiertes Netzwerkmanagement, bei dem Abhängigkeiten von Netzwerkelementen untereinander erfasst und ausgewertet werden. Anhand dieser Maßnahmen kann ein Servicemodell des erstellt werden, das ein flexibles Management der Netzwerkkomponenten im Fehlerfall erlaubt.

Die Aufgabe der Erfindung besteht darin, ein Verfahren anzugeben, das im wesentlichen die automatisierte Ermittlung des Schadensausmaßes in der Folge eines Totalausfalls von in einen Produktionsablauf eingebundenen technischen Komponenten unter Berücksichtigung der schadensausmaßsenkenden Maßnahmen, wie Netzwerkstruktur, Notfallplanung, Wiederanlaufplanung und dem Kunden- und Nutzerverhalten ermöglicht.

Diese Aufgabe wird erfindungsgemäß durch ein Verfahren gemäß Patentanspruch 1 gelöst.

Das Verfahren ermittelt anhand von vorhandenen und aktuell ermittelten Daten automatisch das unmittelbare und mittelbare monetäre Schadensausmaß, z.B. in der Währung €, für ein Objekt, einen Raum oder ein Gebäude.
Hierzu werden die Abhängigkeiten der betroffenen technischen Komponenten untereinander ausgewertet. Die erforderlichen Parameter und Größen sind in entsprechenden Datenbanken verfügbar. Durch eine das Verfahren abarbeitende Datenverarbeitungsanlage werden hierzu automatisierte und strukturierte Datenbankabfragen vorgenommen.

Erfindungsgemäß können auch nur Phasen oder Teilabschnitte eines Produktionsablaufs und die darin eingebundenen technischen Komponenten selektiv betracht werden, das heißt die Ermittlung des Schadensausmaßes nur für Teile eines Produktionsablauf durchgeführt werden.

Vorteilhafte Ausgestaltungen und Weiterbildungen des erfindungsgemäßen Verfahrens sind in den abhängigen Patentansprüchen angegeben.

Nachfolgend wird die Erfindung anhand eines Ausführungsbeispiels unter Bezugnahme auf die Zeichnungen näher erläutert. Hieraus ergeben sich weitere Merkmale, Vorteile und Anwendungsmöglichkeiten der Erfindung. Das Beispiel bezieht sich im Speziellen auf technische Komponenten eines Kommunikationsnetzwerkes. Es wird daher im Folgenden auch von Netzwerkkomponenten gesprochen. Es sei darauf hingewiesen, dass das erfindungsgemäße Verfahren nicht auf Komponenten eines Kommunikationsnetzes beschränkt ist, sondern auf jede Art von in einen Produktionsablauf eingebundenen technischen Komponenten anwendbar ist.
Figur 1 zeigt die wesentlichen Einrichtungen zur Durchführung des Verfahrens;
Figur 2 ist eine schematische Darstellung der Phasen einer Notfall- und Wiederanlaufmaßnahme;
Figuren 3 a, b, c zeigen schematisch die Ermittlung der Anzahl von Kunden ohne Produkt /Dienst für eine gewisse Zeitdauer bei einem Ausfall von zwei Netzwerkkomponenten A und B.

### Erfassung der betroffenen Netzwerkkomponenten

Die Basis zur Durchführung des Verfahrens bildet eine Datenerfassungs- und Auswerteeinrichtung 1.

Die Auswahl des Objekts wird durch den Anwender über eine Anwenderschnittstelle 2 festgelegt. Durch die Auswahl eines definierten Objekts wird eine automatisierte Datenbankabfrage zu einer Objektdatenbank 3 getätigt, um die betroffenen Netzwerkkomponenten des Objektes zu erfassen. In der Objektdatenbank 3 sind insbesondere folgende Informationen verfügbar
- Art der Netzwerkkomponente
- Anzahl der Netzwerkkomponente

### Erfassung der aktuell verwalteten Kunden/Nutzer

Zur Erfassung der aktuell verwalteten Kunden/Nutzer wird gemäß des Verfahrens von der Datenerfassungs- und Auswerteeinrichtung 1 automatisiert eine weitere Abfrage in einer Kundendatenbank 4 vorgenommen. Anhand der von einem Ausfall betroffenen Netzwerkkomponente wird die jeweilige Anzahl der verwalteten Kunden/Nutzer pro Netzwerkkomponente zur Datenerfassungs- und Auswerteeinrichtung 1 übertragen.

Verfahrensgemäß wird die Anzahl der Kunden/Nutzer den Informationen zu Art und Anzahl der Netzwerkkomponenten zugeordnet.

### Erfassung der betroffenen Kunden/Nutzer auf Basis der Netzstruktur

Um dem Kunden/Nutzer letztendlich einen Dienst bzw. ein Produkt zur Verfügung zu stellen, sind verschiedene Netzwerkkomponenten beteiligt. Die Netzwerkkomponenten stehen bei der Bereitstellung von Diensten bzw. Produkten in einer fest definierbaren Abhängigkeit zueinander.
Für jede Netzwerkkomponente werden nur die Kunden in der folgenden Berechnung berücksichtigt, denen nach Wiederverfügbarkeit dieser Netzwerkkomponente alle Dienste wieder zur Verfügung stehen.
Kunden, denen auf Grund der Nichtverfügbarkeit anderer Netzwerkkomponenten der Dienst noch nicht wieder zur Verfügung steht, dürfen nicht in die Berechnung der Netzwerkkomponente eingehen. Diese Kunden werden erst in die Berechnung eingehen, sobald diejenigen Netzwerkkomponenten verfügbar sind, um ihnen alle Dienste wieder zur Verfügung zu stellen.

Den Anteil der Kunden, der von den entsprechenden Netzwerkkomponenten abgezogen werden muss, berechnet die Datenerfassungs- und Auswerteeinrichtung 1 automatisch an Hand der
- Anzahl der gesamten Netzwerkkomponenten im Netz, der
- Anzahl der ausgefallenen Netzwerkkomponenten und dem
- Zeitpunkt der Wiederverfügbarkeit der Netzwerkkomponenten

### Notfall- und Wiederanlaufplanung

Die Reihenfolge der voraussichtlichen Wiederverfügbarkeit von ausgefallenen Netzwerkkomponenten ist durch den chronologischen Verlauf der Notfall- /Wiederanlaufmaßnahme vorgegeben.

In einer Notfall-Datenbank 5 werden u.a. die Investitionen, Kosten und Wirkungsweisen der jeweiligen Notfallmaßnahme und Wiederanlaufmaßnahme gepflegt.

### Zeitlicher Ablauf und Wirkung der Notfallmaßnahme

Die Umsetzung der Notfallmaßnahme wirkt in mehreren zeitlichen Phasen.
- Anlaufphase Notfallplanung,
- "Stufenweises Aktivwerden" der Notfallmaßnahme,
- Verbleibende Kundenbeeinträchtigung trotz Notfallmaßnahme.

Jede Phase der Notfallmaßnahme gibt Auskunft über die Anzahl der betroffenen Kunden in Abhängigkeit zu der zeitlichen Dauer der Phase. Mit fortschreitender Aktivierung der Notfallmaßnahme und bis zur vollständigen Umsetzung der Notfallmaßnahme reduziert sich die Anzahl der betroffenen Kunden/Nutzer.

Trotz Aktivierung der Notfallmaßnahme bleibt u.U. eine verminderte Verfügbarkeit und somit ein Restschaden bis zur Aktivierung der Wiederanlaufmaßnahme bzw. Wiederaufnahme des Normalbetriebes bestehen.

Verfahrensgemäß wird aus der Anzahl der in den Netzwerkkomponenten verwalteten Kunden und dem chronologischen Verlauf der Notfall- und Wiederlaufmaßnahmen,
- die Anzahl der betroffenen Kunden und
- die Dauer der Kundenbeeinträchtigung.
berechnet

### Zeitlicher Ablauf und Wirkung der Wiederanlaufplanung

Die Wiederanlaufplanung ermöglicht den Übergang vom Notbetrieb (Abschluss Notfallmaßnahme) zur Wiederaufnahme des Normalbetriebes.

Jede Phase der Wiederanlaufmaßnahme gibt Auskunft über die jeweilige Anzahl der in der Netzwerkkomponente betroffenen Kunden/Nutzer in Abhängigkeit zu der zeitlichen Dauer der Phase. Mit fortschreitender Aktivierung der Wiederanlaufmaßnahme und bis zur Aufnahme des Normalbetriebes reduziert sich die verbleibende Anzahl der betroffenen Kunden/Nutzer auf Null.

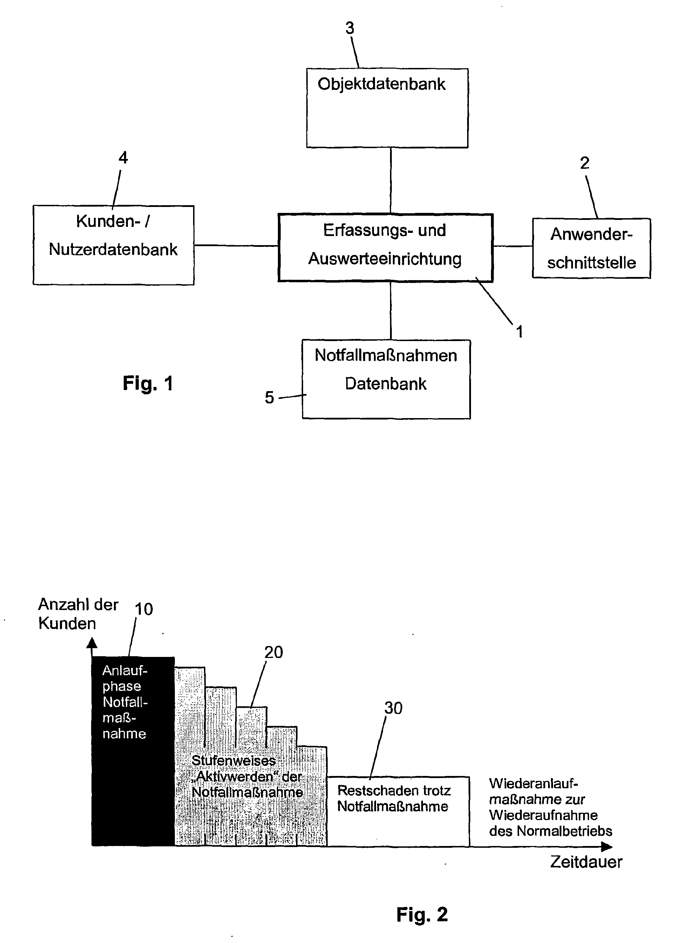

Figur 2 ist eine schematische Darstellung der Phasen einer Notfall- und Wiederanlaufmaßnahme;

### Ablauf der Aktivierung einer Notfallmaßnahme :

In der Anlaufphase der Notfallmaßnahme, Fig. 2, Block 10, wird der Schadensumfang ermittelt und eine geeignete Notfallmaßnahme ausgewählt.
- Kurze Zeitdauer
- Hohe Kundenbeeinträchtigung

In der Phase "Stufenweises Aktivwerden" der Notfallmaßnahme, Fig. 2, Block 20, wird die Kundenbeeinträchtigung sukzessive reduziert.
- Mittlere Zeitdauer
- Hohe bis geringe Kundenbeeinträchtigung (stufig)

Ist die Umsetzung der Notfallmaßnahme abgeschlossen, ist die Reduzierung der Kundenbeeinträchtigung ausgeschöpft, u.U. bleibt ein Restschaden , Fig. 2, Block 30, übrig
- Lange Zeitdauer
- Geringe Kundenbeeinträchtigung (Restschaden)

Den Abschluss bildet die Umsetzung der Wiederanlaufplanung und Wiederaufnahme des Normalbetriebs
- Keine Kundenbeeinträchtigung

### Ermittlung der betroffenen Kunden bezogen auf Zeitdauer (Phasen)

Auf Grundlage der automatisierten Datenbankabfragen berechnet die Erfassungs- und Auswerteeinrichtung 1 selbständig die Anzahl der betroffenen Kunden, denen für eine bestimmte Zeitdauer kein Dienst/Produkt zur Verfügung steht.

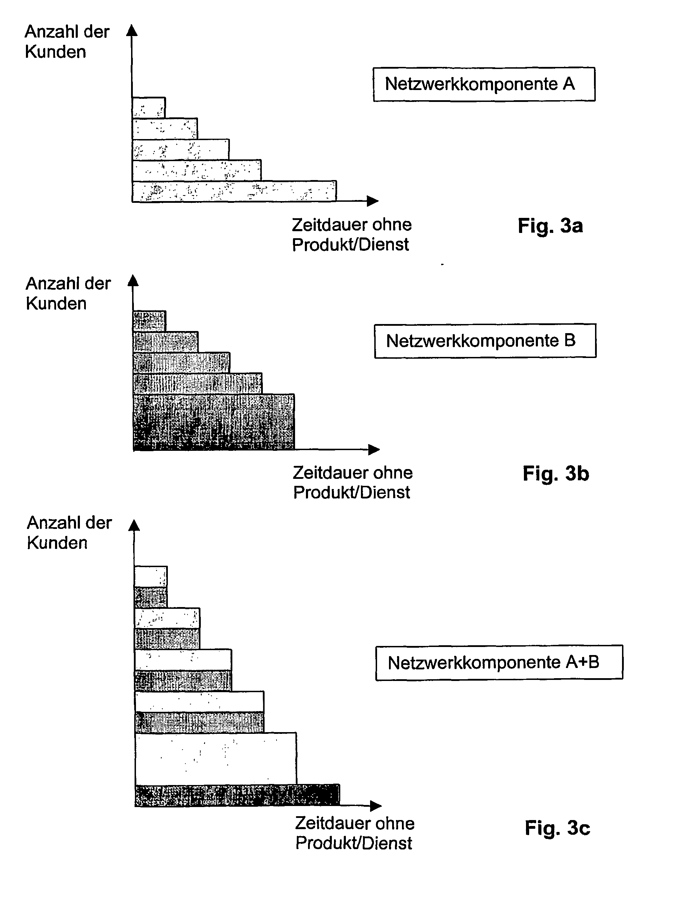

Dies ist in den Figuren 3a, 3b und 3c dargestellt Für jede Netzkomponente A und B wird die Anzahl der betroffenen Kunden ermittelt, denen für eine bestimmte Zeitdauer kein Dienst/Produkt zur Verfügung steht (Fig. 3a und 3b). Die Ergebnisse werden zusammengefasst und ergeben ein Gesamtbild über das Schadenausmaß (Fig. 3c).

### Ermittlung des Schadensausmaßes

Das monetäre Schadensausmaß gliedert sich in
- Unmittelbaren Schaden
- Mittelbaren Schaden

### Ermittlung des unmittelbaren Schadens

Der unmittelbare Schaden wird für jede Netzwerkkomponente in Datenbanken, z.B. Objektdatenbank 3, Kundendatenbank 4, gepflegt und setzt sich im wesentlichen zusammen aus den
- Investitionen und Kosten der Neubeschaffung und Wiederinbetriebnahme der Netzwerkkomponenten
- Umsatzverluste auf Grund der "Nichtverfügbarkeit" der Dienste/Produkte
- Investitionen/Kosten für Notfallmaßnahme(n)

Die Angaben werden aktuell in den Datenbanken 3, 4 gepflegt, wobei durch die Erfassungs- und Auswerteeinrichtung 1 automatisiert die Parameter und Größen in den Datenbanken abgefragt werden.

### Ermittlung des mittelbaren Schadens

Der mittelbare Schaden ist im wesentlichen unabhängig von den ausgefallenen Netzwerkkomponenten. Die Parameter und Größen zur Ermittlung des mittelbaren Schadens werden in den Datenbanken 3, 4, 5 gepflegt. Die wesentlichen Bestandteile sind:
- Neukunden können, bedingt durch den Ausfall, nicht aktiviert werden
- Unzufriedene Bestandskunden kündigen ihre Verträge bzw. verlängern diese nicht
- Mehrkosten entstehen durch massive Anfragen in den Call-Centern
- Kosten entstehen durch Kundenrückgewinnung (Gutschriften, Provisionen)
   Die Angaben werden aktuell in den Datenbanken 3, 4, 5 gepflegt. Das Verfahren fragt automatisiert die Parameter und Größen in den Datenbanken ab.
   Zusätzlich muss insbesondere bei längerfristigen Totalausfällen von Netzwerkkomponenten das mittelbare Schadensausmaß berücksichtigt werden. Dies wird aus dem Kunden-/Nutzerverhalten ermittelt, als wesentliche Anteile sind zu nennen
- Verminderter Neukundenzuwachs
- Ansteigende Kündigungen

### Berechnung des monetären Schadensausmaßes

Anhand des Verfahrens wird selbstständig das bestehende monetäre Schadensausmaß bei Totalausfall aller Netzwerkkomponenten in einem Objekt (Raum/Gebäude) aus den Abfragen berechnet, auf Basis der
- ermittelten Anzahl der betroffenen Kunden/Nutzer und den
- Parametern und Größen des mittelbaren/unmittelbaren Schadensausmaßes

Das monetäre Schadensausmaß wird z.B. in der Einheit € dargestellt.

### Planungsunterstützung

Durch Anwendung des Verfahrens können bereits in der Planungsphase neuer Objekte, Räume und Gebäude wesentliche Erkenntnisse ermittelt werden, um das zu erwartende monetäre Schadensausmaß für das Unternehmen tragbar zu gestalten.

Hierzu werden einzelne Netzwerkkomponenten in die Berechnung hinzugezogen bzw. aus der Berechnung herausgeführt.

Anhand des Verfahrens kann in oben bezeichneter Weise in automatisierter Form das verbleibende Schadensausmaß berechnet werden.

Entscheidet der Planer, den Einbau einer zusätzlichen Netzwerkkomponente bzw. die Verlegung einer Netzwerkkomponente in einen anderen Raum / ein anderes Gebäude, so wird durch Eingabebefehl im verfahrengemäßen Anwendungsprogramm eine automatisierte Bereinigung der Planungsdatenbank veranlasst. Die Umsetzung der physikalisch baulichen Maßnahme wird somit automatisch beauftragt.

Der Neubau bzw. die Verlegung von Netzkomponenten in neue/andere Technikräume/-gebäude ist eine hochwirksame Sicherheitsmaßnahme, wodurch das zu erwartende maximale Schadensausmaß planbar bzw. wirkungsvoll reduziert werden kann. Eine Einhaltung bzw. optimale Unterschreitung des festgesetzten maximale Schadensausmaßes wird dadurch realisierbar.

Das erfindungsgemäße Verfahren ermöglicht auf automatisierte Weise die Simulation von Netzkomponenten-Neubauten /-Verlegungen in andere Technikräume/-gebäude und berechnet das dann zu erwartende maximale Schadensaumaß und die resultierende Menge der betroffenen Kunden. Somit kann planerisch eine optimale Ausschöpfung des Technikraumes/-gebäudes bezogen auf das festgelegte maximale Schadensausmaß erreicht werden.

Als ein weiterer Optimierungsschritt schlägt das Verfahren bei Überschreitung des festgelegten maximalen Schadensausmaßes die Netzkomponenten vor, durch deren Verlegung das festgelegte maximale Schadensausmaß optimal eingehalten wird. Des weiteren schlägt er den Raum/die Räume bzw. das/die Gebäude vor, in denen die ausgewählte "zu verlegende" Netzkomponente aufgebaut werden könnte.

Durch Hinterlegung der Kosten für Sicherheitsmaßnahmen bzw. für Verlegungsmaßnahmen von Netzkomponenten kann das Verfahren anschließend ein Kosten/Nutzen optimiertes Ranking aufzeigen und eine entsprechende Entscheidungsgrundlage liefern.

Im Anwendungsfall "Betrachtung der wirtschaftlichen Aspekte" kann mit Hilfe des Verfahrens auf Grundlage, der Festlegung von Sicherheitsmaßnahmen an bestehenden Technikräumen/-gebäuden der Investition- und Kosteneinsatz optimiert werden.

Des Weiteren ermöglicht das beschriebene Verfahren bei der Ausgestaltung neuer Technikräume/-gebäude bzw. bei der Verlegung von Netzkomponenten in bestehende bzw. neue Technikräume/-gebäude eine Vorschau auf das zu erwartende max. Schadensausmaß.

## Patentansprüche

1. Verfahren zur Ermittlung eines Schadensausmaßes in Folge eines Ausfalls von in einen Produktionsablauf eingebundenen technischen Komponenten in Objekten, wobei zur Durchführung des Verfahrens eine Datenerfassungs- und Auswerteeinrichtung (1) vorgesehen ist, wobei um einem Kunden und/oder Nutzer einen Dienst oder ein Produkt zur Verfügung zu stellen, verschiedene technische Komponenten beteiligt sind, die bei der Bereitstellung von Diensten oder Produkten in einer fest definierbaren Abhängigkeit zueinander stehen, wobei Abhängigkeiten der betroffenen Komponenten untereinander anhand von in Datenbanken (3, 4, 5) vorhandenen Parametern und Größen automatisch erfasst und ausgewertet werden, mit den Schritten:
a) Erfassen der von einem Ausfall betroffenen technischen Komponenten durch Abfrage einer Objektdatenbank (3),
b) Ermitteln der Anzahl der von jeder betroffenen Komponente abhängigen Kunden und/oder Nutzer durch Abfrage einer Kundendatenbank (4), wobei anhand der von einem Ausfall betroffenen Komponenten die jeweilige Anzahl der verwalteten Kunden und/oder Nutzer pro Komponente zur Datenerfassungs- und Auswerteeinrichtung (1) übertragen werden,
c) Ermitteln des Zeitpunkts der voraussichtlichen Wiederverfügbarkeit jeder betroffenen Komponente durch Abfrage einer Notfall-Datenbank (5), wobei eine Reihenfolge der Wiederverfügbarkeit der ausgefallenen Komponenten durch den chronologischen Verlauf einer vorhandenen Notfall- /Wiederanlaufmaßnahme vorgegeben wird, wobei in der Notfall-Datenbank (5) die Investitionen, Kosten und Wirkungsweisen der jeweiligen Notfallmaßnahme und Wiederanlaufmaßnahme gespeichert sind,
d) Ermitteln der Höhe des resultierenden monetären Schadensausmaßes anhand der Ergebnisse aus den Schritten a) bis c), indem aus der Anzahl der in den Komponenten verwalteten Kunden und dem chronologischen Verlauf der Notfall- und Wiederanlaufmaßnahmen, die Anzahl der betroffenen Kunden und die Dauer der Kundenbeeinträchtigung berechnet wird, wobei auf automatisierte Weise eine Simulation von Komponenten-Neubauten und/oder Verlegungen von Komponenten in andere Technikräume/-gebäude durchgeführt wird, und mit diesen Daten ein zu erwartendes maximales Schadensaumaß und die resultierende Menge der betroffenen Kunden berechnet wird.

2. Verfahren nach Anspruch 1, **dadurch gekennzeichnet, dass** nur Phasen oder Teilabschnitte eines Produktionsablaufs und die darin eingebundenen technischen Komponenten selektiv betracht werden.

3. Verfahren nach einem der Ansprüche 1 oder 2, **dadurch gekennzeichnet, dass** die Auswahl eines ausgefallenen Objekts durch einen Anwender festgelegt wird, und durch die Auswahl eines definierten Objekts eine automatisierte Datenbankabfrage in der Objektdatenbank (3) zur Erfassung der betroffenen Komponenten durchgeführt wird.

4. Verfahren nach einem der Ansprüche 1 bis 3, **dadurch gekennzeichnet, dass** die Anzahl der betroffenen (schaden) Kunden/Nutzer den Informationen zu Art und Anzahl der technischen Komponenten zugeordnet wird.

5. Verfahren nach einem der Ansprüche 1 bis 4, **dadurch gekennzeichnet, dass** der unmittelbare, durch den Ausfall von Komponenten verursachte Schaden für jede einzelne Komponente in einer Datenbank verfügbar ist.

6. Verfahren nach einem der Ansprüche 1 bis 5, **dadurch gekennzeichnet, dass** der mittelbare, durch den Ausfall von Komponenten verursachte Schaden in einer Datenbank verfügbar ist.

7. Verfahren nach einem der Ansprüche 1 bis 6, **dadurch gekennzeichnet, dass** eine Berechnung des monetären Schadensausmaßes bei Totalausfall von Komponenten in einem Objekt aus den Abfragen auf Basis der ermittelten Anzahl der betroffenen Kunden/Nutzer und den Parametern und Größen des mittelbaren/unmittelbaren Schadensausmaßes berechnet wird.

8. Verfahren nach einem der Ansprüche 1 bis 7, **dadurch gekennzeichnet, dass** bei einem Überschreiten eines festgelegten maximalen Schadensausmaßes die Komponenten angegeben werden, durch deren Verlegung in andere Technikräume/-gebäude das festgelegte maximale Schadensausmaß eingehalten wird.

9. Verfahren nach einem der Ansprüche 1 bis 8, **dadurch gekennzeichnet, dass** ein Raum/ die Räume bzw. ein/die Gebäude vorgeschlagen werden, in denen die ausgewählte zu verlegende Netzkomponente aufgebaut werden kann.

## Claims

1. Process for determining the extent of damage as a result of failure of technical components in objects integrated in a production cycle, wherein to carry out the process, a data-recording and evaluating device (1) is provided, wherein in order to make available a service or a product to a customer and/or user, various technical components are involved which in the provision of services or products have a firmly definable dependence on one another, wherein dependences of the affected components amongst one another are automatically recorded and evaluated using parameters and values existing in databases (3, 4, 5), having the steps:
a) recording the technical components affected by a failure by interrogating an object database (3),
b) determining the number of customers and/or users dependent on each affected component by interrogating a customer database (4), wherein using the components affected by a failure, the particular number of administered customers and/or users per component are transferred to the data-recording and evaluating device (1),
c) determining the point in time of the expected re-availability of each affected component by interrogating an emergency database (5), wherein a sequence of re-availability of the failed components is preset by the chronological path of an existing emergency/restart measure, wherein the investments, costs and modes of operation of the particular emergency measure and restart measure are stored in the emergency database (5),
d) determining the level of the resulting monetary extent of damage using the results from the steps a) to c),
in that the number of affected customers and the period of customer disturbance is calculated from the number of customers administered in the components and the chronological path of the emergency and restart measures, wherein a simulation of new component installations and/or movements of components to other technical rooms/buildings is carried out in automated manner, and using this data, a maximum extent of damage to be expected and the resulting quantity of affected customers is calculated.

2. Process according to claim 1, **characterised in that** only phases or parts of a production cycle and the technical components integrated therein are considered selectively.

3. Process according to one of claims 1 or 2, **characterised in that** the selection of a failed object is fixed by a user, and by selection of a defined object, automated database interrogation in the object database (3) is carried out to record the affected components.

4. Process according to one of claims 1 to 3, **characterised in that** the number of affected (damaged) customers/users is assigned to the information regarding type and number of technical components.

5. Process according to one of claims 1 to 4, **characterised in that** the direct damage caused by the failure of components for each individual component is available in a database.

6. Process according to one of claims 1 to 5, **characterised in that** the indirect damage caused by the failure of components is available in a database.

7. Process according to one of claims 1 to 6, **characterised in that** a calculation of the extent of monetary damage in the event of total failure of components in an object is calculated from the interrogations on the basis of the determined number of affected customers/users and the parameters and values of the indirect/direct extent of damage.

8. Process according to one of claims 1 to 7, **characterised in that** when exceeding a fixed maximum extent of damage, the components are indicated, by the movement of which to other technical rooms/buildings, the fixed maximum extent of damage is maintained.

9. Process according to one of claims 1 to 8, **characterised in that** a room/the rooms or a/the buildings are proposed, in which the selected network component to be moved may be installed.

## Revendications

1. Procédé pour déterminer l'étendue de dommages dus à une défaillance de composants techniques intégrés à un processus de production, dans des objets, selon lequel il est prévu pour la mise en oeuvre du procédé un dispositif de saisie et d'analyse (1), selon lequel pour mettre à la disposition d'un client et/ou d'un utilisateur un service ou un produit, différents composants techniques sont impliqués et sont liés entre eux par une dépendance apte à être définie définitivement lors de la fourniture de services ou de produits, et selon lequel les dépendances mutuelles des composants concernés sont détectées et analysées automatiquement à l'aide de paramètres et de grandeurs présentes dans des banques de données (3, 4, 5), avec les étapes suivantes :
a) détection des composants techniques concernés par une défaillance, grâce à l'interrogation d'une banque de données d'objets (3),
b) détermination du nombre de clients et/ou d'utilisateurs dépendant de chaque composant concerné, grâce à l'interrogation d'une banque de données de clients (4), étant précisé qu'à l'aide des composants concernés par une défaillance, le nombre de clients et/ou d'utilisateurs gérés est transmis pour chaque composant au dispositif de saisie et d'analyse (1),
c) détermination du moment où il est prévu que chaque composant concerné sera à nouveau disponible, grâce à l'interrogation d'une banque de données de secours (5), un ordre dans lequel les composants défaillants sont à nouveau disponibles étant prédéfini par le déroulement chronologique d'une mesure de secours/redémarrage prévue, et les investissements, coûts et modes de fonctionnement de chaque mesure de secours et de chaque mesure de redémarrage étant mis en mémoire dans la banque de données de secours (5),
d) détermination de l'étendue pécuniaire des dommages à l'aide des résultats des étapes a) à c), grâce au fait qu'à partir du nombre de clients gérés dans les composants et du déroulement chronologique des mesures de secours et de redémarrage, le nombre de clients concernés et la durée de la gêne occasionnée pour les clients sont calculés, étant précisé qu'une simulation de nouvelles constructions de composants et/ou de déplacements de composants vers d'autres espaces/bâtiments techniques est faite de manière automatique, et avec ces données sont calculées une étendue de dommages maximale à prévoir et la quantité de clients concernés qui en résulte.

2. Procédé selon la revendication 1, **caractérisé en ce que** seuls des phases ou des parties d'un processus de production et les composants techniques intégrés dans celui-ci sont examinés sélectivement.

3. Procédé selon la revendication 1 ou 2, **caractérisé en ce que** le choix d'un objet défaillant est fixé par un utilisateur, et grâce au choix d'un objet défini une interrogation automatisée a lieu dans la banque de données d'objets (3) afin de détecter les composants concernés.

4. Procédé selon l'une des revendications 1 à 3, **caractérisé en ce que** le nombre de clients/d'utilisateurs concernés (par les dommages) est associé aux informations relatives au type et au nombre des composants techniques.

5. Procédé selon l'une des revendications 1 à 4, **caractérisé en ce que** les dommages directs causés par la défaillance de composants sont disponibles pour chaque composant individuel dans une banque de données.

6. Procédé selon l'une des revendications 1 à 5, **caractérisé en ce que** les dommages indirects causés par la défaillance de composants sont disponibles dans une banque de données.

7. Procédé selon l'une des revendications 1 à 6, **caractérisé en ce qu'**un calcul de l'étendue pécuniaire des dommages en cas de défaillance totale de composants dans un objet est effectué à partir des interrogations sur la base du nombre déterminé de clients/d'utilisateurs concernés et des paramètres et grandeurs de l'étendue des dommages indirects/directs.

8. Procédé selon l'une des revendications 1 à 7, **caractérisé en ce que** si une étendue maximale fixée des dommages est dépassée, on indique les composants dont le déplacement vers d'autres espaces/bâtiments techniques permet de respecter l'étendue maximale fixée des dommages.

9. Procédé selon l'une des revendications 1 à 8, **caractérisé en ce qu'**on propose un espace/les espaces ou un bâtiment/les bâtiments où le composant de réseau à déplacer qui a été choisi peut être établi.
